(19) Europäisches Patentamt
European Patent Office
Office européen des brevets

(11) **EP 1 375 572 B1**

(12) **EUROPÄISCHE PATENTSCHRIFT**

(45) Veröffentlichungstag und Bekanntmachung des Hinweises auf die Patenterteilung:
**13.06.2007 Patentblatt 2007/24**

(51) Int Cl.:
*C08J 5/18* (2006.01)  *C08L 67/02* (2006.01)
*C08K 5/00* (2006.01)  *B32B 27/36* (2006.01)

(21) Anmeldenummer: **03012260.0**

(22) Anmeldetag: **11.06.2003**

(54) **Stabilisierte Folie auf Basis von titankatalysierten Polyestern**

Stabilized film based on polyesters catalysed with titanium

Film stabilisé à base de polyesters catalysés par du titane

(84) Benannte Vertragsstaaten:
**DE FR GB LU**

(30) Priorität: **20.06.2002 DE 10227437**

(43) Veröffentlichungstag der Anmeldung:
**02.01.2004 Patentblatt 2004/01**

(73) Patentinhaber: **Mitsubishi Polyester Film GmbH**
**65203 Wiesbaden (DE)**

(72) Erfinder:
• **Tano, Kazuo**
**65185 Wiesbaden (DE)**

• **Murschall, Ursula, Dr.**
**55283 Nierstein (DE)**
• **Kliesch, Holger, Dr.**
**55252 Mainz (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 620 245**   **EP-A- 1 344 790**
**WO-A-03/046068**   **AT-B- 404 134**
**US-A- 4 011 196**   **US-A- 4 058 502**

**Beschreibung**

Die Erfindung betrifft eine ein- oder mehrschichtige, biaxial orientierte Folie auf Basis von bevorzugt titankatalysierten Polyestern, die mindestens einen primären Stabilisator zur Verhinderung des oxidativen Abbaus enthält. Die Erfindung betrifft weiterhin ein Verfahren zur Herstellung der Folie und ihre Verwendung.

Die in der industriellen Praxis verwendeten Katalysatoren zur Polykondensation von Polyestern sind Antimon-, Titan- und Germaniumverbindungen. Germanium enthaltende Katalysatoren haben aus dieser Gruppe die höchste katalytische Aktivität gefolgt von Titankatalysatoren. Antimonkatalysatoren weisen die geringste relative Aktivität auf. Dennoch wird der bei weitem überwiegende Teil der auf dem Weltmarkt verwendeten Polyester mit Hilfe von Antimonkatalysatoren hergestellt. Dies liegt daran, dass Germaniumkatalysatoren aufgrund ihres extrem hohen Preises in der Regel unwirtschaftlich sind und Titankatalysatoren zu einer unerwünschten Gelbfärbung und verringerten Thermostabilität der so hergestellten Folie führen können. Dies wird durch Nebenreaktionen verursacht, die zu einer vermehrten Zahl von unerwünschten Gelteilchen als auch zu einer deutlich verringerten Prozessstabilität solcher Folien führen.

Dennoch besteht ein großes Interesse daran, die Antimonkonzentration in Polyesterprodukten deutlich zu verringern, da u.a. auch neue EU-Richtlinien Grenzwerte für die Antimonmigration vorschreiben, die insbesondere in PET (Polyethylenterephthalat) geringer Kristallinität nur schwer einzuhalten sind.

Folien auf Basis von Polyestern, insbesondere von Polyethylenterephthalaten, sind bekannt. Beschrieben sind auch Polyester/-folien, die Zusätze zur Vermeidung des oxidativen Abbaus enthalten.

Polyesterfolien werden allgemein aus einem Kunststoffgranulat hergestellt, das in einem Extruder aufgeschmolzen wird. Über eine Breitschlitzdüse wird die dabei erzeugte Kunststoffschmelze zu einer sogenannten Vorfolie geformt. Die Vorfolie wird dann an einer Abzugs- und Kühlwalze angelegt, anschließend in Längs- und Querrichtung verstreckt und schließlich aufgerollt. Die Folien sollen dabei eine geringe Zahl von Gelteilchen und sonstigen Defekte aufweisen, die das Aussehen oder die weitere Verarbeitung beeinträchtigen. Gelteilchen in der Folie vermindern bei der Folienproduktion die Prozessstabilität, d.h. sie führen zu unerwünschten Abrissen. Daneben verstopfen Gelteilchen die Filter im Extrusionsbereich, was zu weiteren wirtschaftlichen Ausfällen führt.

Die AT 404 134 beschreibt bereits einen Polyester, der einen Stabilisator zur Verhinderung des oxidativen Abbaus enthält und der sich für die Herstellung von gegossenen und blasextrudierten Konstruktionsmaterialien und Extrusionsfolien eignet. Bei dem Stabilisator nach der Lehre dieser Schrift handelt es sich um sterisch gehinderte Phenole, die vor der Polykondensationsreaktion der Reaktionsmischung zugegeben und so in die Polymerkette eingebaut werden. Es ist zwar beschrieben, dass der so stabilisierte Polyester in Gegenwart einer organischen Titanverbindung als Katalysator hergestellt wird, aber es ist nicht angegeben, dass er für biaxial orientierte Folien eingesetzt wird. Der Fachmann konnte deshalb aus dem Stand der Technik keine Erkenntnisse über die Vorteile der Titankatalyse für die wirtschaftliche Herstellung von biaxial orientierten Folien aus Polyester unter großtechnischen Bedingungen gewinnen.

Es bestand daher die Aufgabe, eine Polyesterfolie aufzufinden, welche die aus dem Stand der Technik bekannten Nachteile, wie z. B. hoher Antimongehalt und Gelteilchen in der Folie, nicht aufweist. Insbesondere sollte die Folie weniger Stippen und durch Gelpartikel verursachte Defekte aufweisen. Darüber hinaus sollte die Prozessstabilität gesteigert werden, d.h. es sollten keine Folienabrisse oder ähnliche Störungen bei der Produktion auftreten. Die Filterstandzeiten sollten verlängert und das Folienregenerat auch in größeren Anteilen wieder einsetzbar sein. Weiterhin sollten aufgrund solcher verbesserter Eigenschaften der Durchsatz und die Produktionsgeschwindigkeit optimiert werden.

Gelöst wird diese Aufgabe durch eine ein- oder mehrschichtige, biaxial orientierte Folie aus titankatalysiertem Polyester, enthaltend mindestens einen Stabilisator zur Verhinderung des oxidativen Abbaus, der zumindest partiell kovalent in die Polymerkette des Polyesters eingebaut ist.

Der Anteil des Stabilisators im erfindungsgemäßen Polyester beträgt bevorzugt 100 bis 10.000 ppm, insbesondere 150 bis 3000 ppm, besonders bevorzugt 200 bis 1000 ppm. Unter ppm werden Gewichtsteile bezogen auf das Gesamtgewicht des den Stabilisator enthaltenden Polyesters verstanden. Es können auch Mischungen verschiedener Stabilisatoren eingesetzt werden.

Vorzugsweise ist dieser sog. primäre Stabilisator Bestandteil der Polymerhauptkette des Polyesters. Er enthält demgemäß zur Polykondensation bei der Polyesterbildung befähigte Gruppen, vorzugsweise Carboxy- und/oder Estergruppen, besonders bevorzugt Estergruppen. Besonders bevorzugte primäre Stabilisatoren sind phenolische Verbindungen, insbesondere sterisch gehinderte Phenole, die über zusätzliche Ester- und/oder Carboxygruppen verfügen, die zur Teilnahme an der Polykondensationsreaktion befähigt sind. Solche sterisch gehinderten Phenole sind z.B. unter der Bezeichnung Irganox® von Ciba Specialty Chemicals erhältlich. Geeignete Stabilisatoren sind daneben auch Thio-bisphenole, Alkyliden-bis-phenole, Alkylphenole, Hydroxybenzylverbindungen, Acyl-aminophenole und Hydroxyphenylpropionate. Weiterhin sind aromatische Verbindungen mit 2 oder mehr sekundären Aminogruppen geeignet. Solche primären Stabilisatoren sind beispielsweise beschrieben in der Monographie von Gächter und Müller "Kunststoffadditive", 2. Auflage, Carl Hanser Verlag, und in der Monographie von Dr. Hans Zweifel, "Plastics Additive Handbook', 5. Auflage, Carl Hanser Verlag.

Diese primären Stabilisatoren sind gegebenenfalls kombiniert mit sekundären Stabilisatoren, die die Wirkung der primären unterstützen oder auch verstärken. Als sekundäre Stabilisatoren geeignet sind insbesondere Thioether sowie Zink-dibutyl-dithiocarbamat. Der sekundäre Stabilisator wird dem Polyester allgemein als Additiv zugesetzt, ist also kein integraler (kovalent gebundener) Bestandteil des Polyesters. Sein Anteil beträgt bevorzugt 0,01 bis 1,0 Gew.-%, insbesondere 0,05 bis 0,5 Gew.-%, jeweils bezogen auf das Gewicht des den Stabilisator enthaltenden Polyesters.

Der erfindungsgemäße Polyester mit dem kovalent eingebundenen primären Stabilisator (im folgenden bezeichnet als "modifizierter Polyester") hat bevorzugt einen SV-Wert im Bereich von 450 bis 1.100, insbesondere 700 bis 900.

Wird dieser Polyester z.B. nach dem Dimethylterepthalat(DMT)-Verfahren hergestellt, so wird der primäre Stabilisator zweckmäßig vor der Umesterung oder nach der Umesterung direkt vor der Polykondensation in Form einer Lösung oder Dispersion in Glykol zugegeben. Der spezifische Schmelzewiderstand des auf diese Weise erhaltenen modifizierten Polyesters liegt im Bereich von $1 \cdot 10^7$ bis $120 \cdot 10^7$ Ohm/cm und ist damit nicht signifikant verschieden von dem eines nicht-modifizierten Polyesters. Gegebenenfalls kann der spezifische Schmeizewiderstand durch Zugabe von ionischen Additiven auf den gewünschten Wert eingestellt werden. Beispiele für solche Additive sind Magnesiumstearat oder Kaliumacetat u.a.

Der modifizierte Polyester enthält bevorzugt Einheiten aus Ethylenglykol und Terephthalsäure und/oder Einheiten aus Isophthalsäure, Naphthalin-2,6-dicarbonsäure und/oder Biphenyldicarbonsäure (= Bibenzoesäure) und/oder Einheiten aus aliphatischen oder cycloaliphatischen Diolen mit 2 bis 8 Kohlenstoffatomen, insbesondere aus Propylenglykol, Butylenglykol und/oder Cyclohexandimethanol. Es handelt sich demgemäß bevorzugt um modifizierte Polyethylenterephthalate, Polybutylenterephthalate, Poly(1,4-cyclohexandimethylenterephthalat), Polyethylennaphthalin-2,6-dicarboxylat, Polyethylennaphthalin-1,5-dicarboxylat oder Polyethylennaphthalat/Bibenzoat. Modifiziertes Polyethylenterephthalat (PET) und modifiziertes Polyethylennaphthalat (PEN) sowie Gemische davon sind bevorzugt. In einer weiteren bevorzugten Ausführungsform enthält der Polyester zusätzlich mindestens 5 Gew.-% Isophthalsäure.

Unter der Bezeichnung modifizierte, Polyethylenterephthalate oder Polyethylennaphthalate sollen dabei Homopolymere, Compounds, Copolymere, Recyclate und andere Variationen verstanden werden.

Die erfindungsgemäßen Polyester können z. B. aus Dimethylterephthalat nach bekannten Verfahren, z. B. nach dem Umesterungsverfahren (DMT-Verfahren), hergestellt werden, wobei sich als Umesterungskatalysatoren Zink-, Magnesium-, Calcium-, Mangan-, Lithium- oder Germaniumsalze eignen. Sie können auch durch Direktveresterung hergestellt werden (PTA-Verfahren). Dabei können verschiedene Polykondensationskatalysatoren eingesetzt werden.

Bevorzugt im Sinne der Erfindung sind dabei Titanverbindungen in einer Konzentration im Polyester von 1 - 300 ppm (bezogen auf Titan), vorzugsweise 2 -100 ppm und besonders bevorzugt 5 - 50 ppm. Daneben können noch Germanium- und/oder Antimonkatalysatoren anwesend sein, wobei für Antimon die Konzentration bei 0 - 150 ppm, bevorzugt bei 0 - 50 ppm und besonders bevorzugt <2 ppm liegt. Die Germaniumkonzentration liegt bevorzugt bei 0-10 ppm, insbesondere bei < 1 ppm.

Die für die erfindungsgemäßen Folien verwendeten Polyester werden mit Titankatalysatoren durch Direktveresterung hergestellt.

Die Stabilisatoren werden vor der Polykondensation den Ausgangskomponenten zugesetzt und durch Polykondensation - zumindest partiell - in die Polymerhauptkette des Polyesters eingebaut.

Durch den eingebundenen primären Stabilisator wird die thermische Schädigung des Polymers bei der Polykondensationsreaktion reduziert. Dies gilt sowohl für das DMT- als auch für das PTA-Verfahren und ist von besonderer Bedeutung bei der Herstellung von Polyestern, die z.B. mit Pigmenten oder Partikeln (insbesondere Siliciumdioxid) gefüllt sind.

Die Pigmente oder Partikel werden dabei in gleicher Weise vor der Polykondensation zugegeben.

Bis zu 50 mol-%, bevorzugt bis zu 30 mol-%, der Polymereinheiten in dem Polyester können ersetzt sein durch Einheiten aus Comonomeren. Dabei können die Dicarbonsäurekomponente, die Glykolkomponente oder beide teilweise ersetzt sein. Als weitere Säurekomponente können die Polyester beispielsweise Adipinsäure, Glutarsäure, Bernsteinsäure, Sebacinsäure, 5-Na-sulfo-isophthalsäure oder auch polyfunktionelle Säuren wie Trimellithsäure enthalten.

Die erfindungsgemäße biaxial orientierte Folie hat allgemein eine Dicke von 0,5 bis 500 $\mu$m, bevorzugt von 1 bis 250 $\mu$m, besonders bevorzugt 2 bis 30 $\mu$m.

Bei Verwendung der modifizierten Polyester gemäß der vorliegenden Erfindung treten bei der Folienproduktion überraschenderweise praktisch keine Düsenablagerungen mehr auf, so dass das Profil und die Rollenaufmachung der damit hergestellten Folie deutlich besser sind als bei Folien aus Standardrohstoffen (das sind Polyester ohne einkondensierte Stabilisatoren). Selbst nach zweitägiger Produktion werden keinerlei Ablagerungen festgestellt. Das Profil der Folie kann daher über einen sehr langen Zeitraum exakt konstant gehalten werden, was zu einer sehr guten Rollenaufmachung führt. Überraschenderweise ist die Anzahl der Gele und Stippen im Vergleich zu einer Folie aus nicht modifiziertem Polyester auch bei Einsatz von Ti-katalysiertem Polyester deutlich niedriger, so dass die Oberflächenqualität extrem verbessert ist. Selbst bei höheren Produktionsgeschwindigkeiten kommt es praktisch nicht mehr zu Folienabrissen. Bei zweitägiger Produktion einer Dünnstfolie mit einer Dicke von 4,5 $\mu$m, die bei hoher Produktionsgeschwindigkeit (mehr als 280 m/min) hergestellt wurde, trat kein einziger Abriss auf.

Weiterhin ist überraschend, dass die Polymerfilter bei Einsatz der erfindungsgemäßen Polyester eine längere Standzeit haben. Je nach Folientyp sind die Standzeiten deutlich verlängert, teilweise verdoppelt. Die Wirtschaftlichkeit der Folienherstellung ist daher deutlich verbessert. Überraschend ist auch, dass sich das bei der Folienherstellung immanent anfallende Regenerat problemlos auch in einer großen Menge (bis zu 60 Gew.-%) wieder einsetzen lässt, ohne die Eigenschaften der Folie negativ zu beeinflussen. Selbst die Gelbzahl der Folie hat sich trotz des Einsatzes von Titankatalysatoren und trotz Einsatz von großen Mengen an Regenerat nicht verschlechtert, was mehr als überraschend ist.

Die erfindungsgemäße Polyesterfolie kann auch einen mehrschichtigen Aufbau haben. Sie besteht dann allgemein aus mindestens einer Kern- oder Basisschicht und mindestens einer Deckschicht. Dreischichtige Folien mit einem A - B - A - oder A - B - C - Aufbau (B = Kernschicht, A und C = Deckschichten) sind bevorzugt. Die Kernschicht besteht dabei bevorzugt aus dem mit dem Stabilisator modifizierten Polyester, insbesondere aus einem Polyethylenterephthalat-Homopolymeren. Als modifizierte PET-Homopolymere werden dabei solche bezeichnet, die neben den Ethylenglykol-, den Terephthalsäure-Einheiten und den Einheiten aus dem Stabilisator keine Einheiten aus anderen Monomeren enthalten. Die Deckschichten können z. B. aus modifizierten oder unmodifizierten PET- oder PEN-Homopolymeren, aus modifizierten oder unmodifizierten Poly(ethylenterephthalat/ethylennaphthalat) -Copolymeren oder entsprechenden Compounds bestehen.

Kern- oder Basisschicht und/oder Deckschicht(en) können neben den primären und gegebenenfalls sekundären Stabilisatoren zusätzlich weitere übliche Additive enthalten, wie Antiblockmittel, lösliche Farbstoffe, Weiß- und/oder Farbpigmente. Die Additive werden zweckmäßig dem Polymer bzw. der Polymermischung bereits vor dem Aufschmelzen zugesetzt.

Als Additive können auch Mischungen von zwei oder mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen beispielsweise in Form einer glykolischen Suspension bereits während der Polykondensation oder später unmittelbar vor der Extrusion in Form eines oder mehrerer Masterbatche zugegeben werden. Als besonders geeignet haben sich Additivkonzentrationen im Bereich von 0,0001 bis 20,0 Gew.-%, bezogen auf das Gewicht der damit ausgerüsteten Schicht(en), erwiesen.

Die mehrschichtigen Folien können demgemäß einen symmetrischen oder unsymmetrischen Aufbau haben. Kern- und/oder Deckschichten können mit zusätzlichen Additiven ausgestattet sein oder aus verschiedenartigen Polyestern (z.B. mit verschiedenem Molekulargewicht oder verschiedener Viskosität) bestehen. Die mehrschichtigen Folien lassen sich besonders einfach durch Coextrusion herstellen.

Bei der Folienherstellung kann zum einen ein sog. Vollrohstoff eingesetzt werden, dem bereits alle Additive vor der Polykondensation zugesetzt wurden. Zum anderen können sämtliche oder einzelne Additive, bis auf den primären Stabilisator, auch während der Folienproduktion, d. h. nach der Polykondensation, zugeführt werden, vorzugsweise mit Hilfe der Masterbatch-Technologie. Dabei werden verschiedene Rohstoffkomponenten, die jeweils unterschiedliche Additive enthalten, vor der Extrusion gemischt. Der modifizierte Polyester kann dabei den sog. Klarrohstoff bilden oder zumindest einen wesentlichen Bestandteil des Klarrohstoffes, dem dann die Masterbatche mit den verschiedenen Additiven hinzugefügt werden. Der modifizierte Polyester kann auch allein oder zusätzlich über die Masterbatche eingeführt werden.

Die Rohstoffkomponenten wie auch die gegebenenfalls eingesetzten Masterbatche sollten bevorzugt vorkristallisiert bzw. vorgetrocknet sein. Die Vortrocknung beinhaltet zweckmäßigerweise ein graduelles Erhitzen unter reduziertem Druck (z. B. 20 bis 80 mbar, vorzugsweise 30 bis 60 mbar, insbesondere 40 bis 50 mbar) sowie Rühren und gegebenenfalls ein Nachtrocknen bei konstanter, erhöhter Temperatur (ebenfalls unter reduziertem Druck). Es ist zweckmäßig, die Rohstoffkomponenten zusammen mit den Polymeren der Basis- und/oder Deckschichten und gegebenenfalls weiteren Komponenten bei Raumtemperatur, bevorzugt chargenweise, in einen Vakuumtrockner zu füllen. Im Laufe der Trocken- bzw. Verweilzeit wird ein Temperaturspektrum von ca. 10 bis 160 °C, vorzugsweise 20 bis 150 °C, insbesondere 30 bis 130 °C, durchlaufen. Während der etwa 6-stündigen, vorzugsweise 5-stündigen, insbesondere 4-stündigen, Verweilzeit wird die Rohstoffmischung mit 10 bis 70 Upm, vorzugsweise 15 bis 65 Upm, insbesondere 20 bis 60 Upm, gerührt. Das so vorkristallisierte bzw. vorgetrocknete Rohstoffgemisch wird in einem nachgeschalteten ebenfalls (teil-) evakuierten Behälter bei 90 bis 180 °C, vorzugsweise 100 bis 170 °C, insbesondere 110 bis 160 °C, für 2 bis 8 Stunden, vorzugsweise 3 bis 7 Stunden, insbesondere 4 bis 6 Stunden, nachgetrocknet.

Bei dem erfindungsgemäß bevorzugten Extrusionsverfahren zur Herstellung der Folie wird das aufgeschmolzene Polyestermaterial bzw. Rohstoffgemisch durch eine Schlitzdüse extrudiert bzw. coextrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals und Längsrichtung und/oder Querrichtung verstreckt (orientiert). Die Strecktemperaturen liegen im allgemeinen bei ca. 10 bis 60 °C über der Glas-Übergangstemperatur $T_g$ der Folie, das Streckverhältnis der Längsstreckung liegt üblicherweise bei 2 bis 6, insbesondere bei 3 bis 4,5, das der Querstreckung üblicherweise bei 2 bis 5, insbesondere bei 3 bis 4,5, und das der gegebenenfalls durchgeführten zweiten Längs- und Querstreckung bei ca. 1,1 bis 3. Die erste Längsstreckung kann auch gleichzeitig mit der Querstreckung (Simultanstreckung) durchgeführt werden. Es folgt danach die Thermofixierung der Folie bei Ofentemperaturen von ca. 150 bis 250 °C, insbesondere von 170 bis 240 °C. Anschließend wird die Folie abgekühlt und aufgewickelt.

Durch die Kombination ihrer ausgezeichneten Eigenschaften eignen sich die erfindungsgemäßen Folien für eine Vielzahl verschiedener Anwendungen, besonders im industriellen Bereich, im Elektronikbereich, für Thermotransfer, als Verpackungsmaterial, als Magnetband-, Präge-, Trenn- oder Deckelfolien, als Kondensatorfolie, als Isoliermaterial, zum Kaschieren und Laminieren, um nur einiges zu nennen. Mit besonderem Vorteil lassen sich die Folien überall dort einsetzen, wo es auf eine besonders gleichmäßige und hohe Qualität ankommt.

In den nachfolgenden Ausführungsbeispielen erfolgt die Messung der einzelnen Eigenschaften gemäß den folgenden Normen bzw. Verfahren. Diese Messmethoden gelten auch für die in der vorangehenden Beschreibung verwendeten Parameter.

Mittlere Dicke

Die mittlere Dicke $d_F$ wird bei bekannter Länge, Breite und Dichte einer Folie aus deren Gewicht bestimmt. Gemessen wird das Gewicht eines auf dem Zuschneidetisch vorbereiteten Folienstreifens, der aus der Mitte eines über die ganze Rollenbreite gehenden Musters genommen wird. Die Berechnung von $d_F$ erfolgt nach der Formel

$$d_F[\mu m] = \frac{m[g]}{l[mm] \cdot b[mm] \cdot d[g/cm^3]} \cdot 10^{-6}$$

wobei gilt:

m = Masse des untersuchten Folienstückes
l = Länge der Probe
b = Breite der Probe
d = Dichte des untersuchten Materials (für Polyester z.B.1,395 g/cm$^3$)

Die einzelnen Probestreifen werden nach dem Zuschneiden auf einer Analysenwaage der Fa. Mettler PM 200 (Höchstlast 200 g) verwogen. Ein daran angeschlossener Computer vom Typ HP Vectra ES/12 übernimmt nach der Eingabe von Maschine und Rollennummer alle Parameter aus dem OPUS-Programm und errechnet damit die mittlere Dicke.

Gelbwert:

Der Gelbwert (YID) ist die Abweichung von der Farblosigkeit in Richtung "Gelb" und wird gemäß DIN 6167 gemessen. Gelbwerte kleiner 5 sind visuell nicht sichtbar.
(DIN = Deutsches Institut für Normung)

Standardviskosität (SV) und intrinsische Viskosität (IV):

Die Standardviskosität SV wurde - angelehnt an DIN 53726 - als 1%ige Lösung in Dichloressigsäure (DCE) bei 25 °C gemessen. SV (DCE) = ($h_{rel}$-1) x 1000. Die intrinsische Viskosität (IV) berechnet sich wie folgt aus der Standardviskosität (SV)

$$IV = [\eta] = 6{,}907 \cdot 10^{-4} \cdot SV\ (DCE) + 0{,}063096\ [dl/g]$$

Oberflächendefekte

Oberflächendefekte (Gele und Stippen) werden visuell bestimmt.

Rollenaufmachung

Die Rollenaufmachung wird nach den Kriterien "Längsrillen, Falten und Verlauf" visuell beurteilt.

Abrisse

Die Anzahl der Folienabrisse pro Zeiteinheit in der Produktion wird mit der bei konventionellem Polymer verglichen und die prozentuale Abweichung festgestellt.

Düsenablagerungen

Die Düsenablagerungen werden visuell bestimmt.

Folienprofil

Das Profil der Folie wird kapazitiv mit Hilfe des elektronischen Dickenmessgerätes ML 210-12-1 der Firma Eichhorn-Hausmann (Deutschland) bestimmt. Dazu wird ein 70 mm breiter Streifen in Querrichtung über die gesamte Folienbreite ausgeschnitten und auf eine Aluminiumwalze aufgewickelt. Die Folie wird mit einer Abrolleinrichtung abgerollt und dabei zwischen 2 Kondensatorplatten durchgeführt. Die eingestellte Dielektrizitätskonstante beträgt 3,30.

Die durch die Dickenunterschiede der Folie hervorgerufenen elektrischen Spannungsunterschiede werden mit Hilfe geeigneter Software in ein Dickenprofil umgewandelt.

Der Wert ΔE gibt den Unterschied zwischen maximaler und minimaler Dicke über die gesamte Folienbreite an.

Filterstandzeit im Extrusionsbereich

Der Wechsel von (Polymer-) Filtern kann zum einen durch Erreichen der Druckgrenze erforderlich werden, zum andern durch die Bildung von Stippen oder Gelen. Nach einer bestimmten Anzahl von Tagen wird die Filterstandzeit mit der bei konventionellem Polymer verglichen und die prozentuale Abweichung festgestellt.

In den folgenden Beispielen wird die Erfindung näher erläutert, ohne sie in irgendeiner Weise zu beschränken. Prozente sind dabei Gewichtsprozente, soweit nicht anders angegeben oder aus dem Zusammenhang ersichtlich; ppm = Gewichtsteile.

**Beispiel 1**

Polyethylenterephthalat (PET) (Fa. KoSa, Deutschland), das 1000 ppm Irganox®1010 (Fa. Ciba Specialties, Schweiz) als integralen Bestandteil der Polymerkette (Polymer 1) und noch 25 ppm Titan aus dem Polykondensationskatalysator Kalium-Titanyloxalat enthält, mit einem SV-Wert von 810, wurde bei 160 °C auf eine Restfeuchte von 50 ppm getrocknet und einem Extruder zugeführt. Die Folie enthielt weiterhin 30 % arteigenes Regenerat. Durch anschließende stufenweise Orientierung in Längs- und Querrichtung wurde eine einschichtige, 50 μm dicke, glasklare Folie hergestellt. Die Folie wurde 7 Tage lang bei einer Geschwindigkeit von 110 m/min produziert.

**Beispiel 2**

Es wurde eine 4,5 μm dicke Folie mit folgender Zusammensetzung hergestellt:

60 % Polymer 1 aus Beispiel 1;
10 % PET-Masterbatch, das 1.200 ppm in die Polymerkette einkondensiertes Irganox® 1010, 20.000 ppm Sylobloc®44H (Fa. Grace, Deutschland, $SiO_2$ Antiblockmittel) als Additiv und 15 ppm Titan aus Tetraisopropyltitanat als Polykondensationskatalysator enthielt;
30 % des bei der Produktion immanent anfallenden Regenerat

Die Produktionsgeschwindigkeit betrug 280 m/min, die Produktionsdauer 14 Tage.

**Beispiel 3**

Es wurde eine 12 μm dicke Folie aus einem Polymer hergestellt, das neben Polyethylenterephthalat 500 ppm in die Polymerkette einkondensiertes Irganox 1010, 1.500 ppm Sylobloc 44H als Additiv und 30 ppm Titan aus Lithium-Titanyloxalat als Polykondensationskatalysator enthielt. Der Anteil an arteigenem Regenerat betrug 40 %. Die Produktionsgeschwindigkeit betrug 340 m/min, die Produktionsdauer 12 Tage.

**Vergleichsbeispiel V1**

Beispiel 2 wurde wiederholt. Die eingesetzten Polymere enthielten jedoch kein Irganox® 1010.

**Vergleichsbeispiel V2**

Beispiel 3 wurde wiederholt. Die eingesetzten Polymere enthielten jedoch kein Irganox® 1010.
Die nachfolgende Tabelle zeigt das Eigenschaftsprofil der gemäß den Beispielen und Vergleichsbeispielen hergestellten Folien:

| | | **Beispiele** | | | | |
|---|---|---|---|---|---|---|
| **Eigenschaften** | | **1** | **2** | **3** | **V1** | **V2** |
| mittlere Dicke | $\mu$m | 50 | 4,5 | 12 | 4,5 | 12 |
| Profil $\Delta$E | $\mu$m | 0,4 | 0,3 | 0,4 | 0,7 | 0,6 |
| Oberflächendefekte)[1] | | 7 | 9 | 9 | 30 | 25 |
| Rollenaufmachung | | gut | gut | gut | Längsrillen, Falten | Längsrillen, Falten |
| Abrisse)[2] | % | 25 | 70 | 50 | 0 | 0 |
| Filterstandzeit)[2] | % | 35 | 90 | 70 | 0 | 0 |
| Gelbwert | | 4 | 1,8 | 2,5 | 2,4 | 5 |
| Düsenablagerungen | | keine beobachtet | keine beobachtet | keine beobachtet | deutlich sichtbar | deutlich sichtbar |
| )[1] = Anzahl der Defekte pro 5 m$^2$ | | | )[2] = Verbesserung in % gegenüber "Standard" | | | |

**Patentansprüche**

1. Ein- oder mehrschichtige, biaxial orientierte Folie aus titankatalysiertem Polyester, enthaltend mindestens einen Stabilisator zur Verhinderung des oxidativen Abbaus, der zumindest partiell kovalent in die Polymerkette des Polyesters eingebaut ist.

2. Polyesterfolie nach Anspruch 1, **dadurch gekennzeichnet, dass** der Stabilisator mindestens zwei zur Polykondensation bei der Polyesterbildung befähigte Carboxy- und/oder Estergruppen, aufweist.

3. Polyesterfolie nach Anspruch 1 oder 2, **dadurch gekennzeichnet, dass** es sich bei dem Stabilisator um ein sterisch gehindertes Phenol handelt.

4. Polyesterfolie nach einem oder mehreren der Ansprüche 1 bis 3, **dadurch gekennzeichnet, dass** der Gewichtsanteil des Stabilisators 100 bis 10.000 ppm, bezogen auf das Gesamtgewicht des den Stabilisator enthaltenden Polyesters, beträgt.

5. Polyesterfolie nach einem oder mehreren der Ansprüche 1 bis 4, **dadurch gekennzeichnet, dass** die Folie einen oder mehrere weitere Stabilisatoren, die nicht kovalent in die Polymerkette des Polyesters eingebaut sind, enthält.

6. Polyesterfolie nach einem oder mehreren der Ansprüche 1 bis 5, **dadurch gekennzeichnet, dass** es sich bei den weiteren Stabilisatoren um Thioether und/oder um Zink-dibutyl-dithiocarbamat handelt.

7. Polyesterfolie nach einem oder mehreren der Ansprüche 1 bis 6, **dadurch gekennzeichnet, dass** der verwendete Polyester Einheiten aus Ethylenglykol und Terephthalsäure und/oder Einheiten aus Isophthalsäure, Naphthalin-2,6-dicarbonsäure, Biphenyldicarbonsäure und/oder Einheiten aus aliphatischen oder cycloaliphatischen Diolen mit 2 bis 8 Kohlenstoffatomen aufweist.

8. Polyesterfolie nach einem oder mehreren der Ansprüche 1 bis 7, **dadurch gekennzeichnet, dass** der den Stabilisator enthaltende Polyester eine Standardviskosität von 450 bis 1100 aufweist.

9. Polyesterfolie nach einem oder mehreren der Ansprüche 1 bis 8, **dadurch gekennzeichnet, dass** als Polyester Polyethylenterephthalat oder Polymethylennaphthalat oder Gemische davon verwendet werden.

10. Polyesterfolie nach einem oder mehreren der Ansprüche 1 bis 9, **dadurch gekennzeichnet, dass** der verwendete Polyester einen Antimongehalt von kleiner als 150 ppm aufweist.

11. Polyesterfolie nach einem oder mehreren der Ansprüche 1 bis 10, **dadurch gekennzeichnet, dass** der verwendete Polyester einen Antimongehalt von kleiner als 50 ppm aufweist.

12. Polyesterfolie nach einem oder mehreren der Ansprüche 1 bis 11, **dadurch gekennzeichnet, dass** die Folie einen Schichtaufbau A-B -C aufweist, wobei die Deckschichten A und C gleich oder verschieden sind.

13. Polyesterfolie nach einem oder mehreren der Ansprüche 1 bis 12, **dadurch gekennzeichnet, dass** die Folie weitere Additive wie Antiblockmittel, Farbstoffe, Weiß- oder Farbpigmente enthält.

14. Verfahren zur Herstellung einer Polyesterfolie nach einem oder mehreren der Ansprüche 1 bis 13, umfassend die Schritte

a) Herstellen einer ein- oder mehrschichtigen Folie durch Extrusion oder Koextrusion und Ausformen der Schmelzen zu flachen Schmelzfilmen,
b) biaxiales Strecken der Folie und
c) Thermofixieren der gestreckten Folie.

15. Verwendung einer Polyesterfolie nach einem oder mehreren der Ansprüche 1 bis 13 im Elektronikbereich, für Thermotransfer, als Verpackungsmaterial, als Magnetband-, Präge-, Trenn-, Deckel- oder Kondensatorfolie oder als Isoliermaterial.

**Claims**

1. A single- or multilayer, biaxially oriented film composed of titanium-catalyzed polyester, comprising at least one stabilizer for inhibiting oxidative degradation, which at least to some extent has been covalently incorporated into the polymer chain of the polyester.

2. The polyester film as claimed in claim 1, wherein the stabilizer has at least two carboxy and/or ester groups capable of polycondensation during polyester formation.

3. The polyester film as claimed in claim 1 or 2, wherein the stabilizer is a sterically hindered phenol.

4. The polyester film as claimed in one or more of claims 1 to 3, wherein the proportion by weight of the stabilizer is from 100 to 10 000 ppm, based on the total weight of the polyester comprising the stabilizer.

5. The polyester film as claimed in one or more of claims 1 to 4, which comprises one or more other stabilizers which have not been covalently incorporated into the polymer chain of the polyester.

6. The polyester film as claimed in one or more of claims 1 to 5, wherein the stabilizers are thioethers and/or zinc dibutyldithiocarbamate.

7. The polyester film as claimed in one or more of claims 1 to 6, wherein the polyester used has units of ethylene glycol and terephthalic acid and/or units of isophthalic acid, naphthalene-2,6-dicarboxylic acid, biphenyldicarboxylic acid, and/or units of aliphatic or cycloaliphatic diols having from 2 to 8 carbon atoms.

8. The polyester film as claimed in one or more of claims 1 to 7, wherein the polyester comprising the stabilizer has a standard viscosity of from 450 to 1 100.

9. The polyester film as claimed in one or more of claims 1 to 8, wherein the polyester used comprises polyethylene terephthalate or polyethylene naphthalate or a mixture of these.

10. The polyester film as claimed in one or more of claims 1 to 9, wherein the polyester used has an antimony content of less than 150 ppm.

11. The polyester film as claimed in one or more of claims 1 to 10, wherein the polyester used has an antimony content of less than 50 ppm.

12. The polyester film as claimed in one or more of claims 1 to 11, which has an A-B-C layer structure, the outer layers A and C being identical or different.

13. The polyester film as claimed in one or more of claims 1 to 12, which comprises other additives, such as antiblocking agents, dyes, white pigments, or color pigments.

14. A process for producing a polyester film as claimed in one or more of claims 1 to 13, encompassing the steps of

a) producing a single- or multilayer film by extrusion or coextrusion and shaping the melts to give flat melt films,
b) biaxially stretching the film, and
c) heat-setting the stretched film.

15. The use of a polyester film as claimed in one or more of claims 1 to 13 in the electronic sector, for thermal transfer, as a packaging material, as a magnetic tape film, stamping foil, release film, lid film, or capacitor film, or as insulating material.


## Revendications

1. Film mono- ou multicouche orienté biaxialement, à base de polyester catalysé au titane, contenant au moins un stabilisant destiné à empêcher la dégradation par oxydation, qui est incorporé au moins partiellement par liaison covalente dans la chaîne polymère du polyester.

2. Film de polyester selon la revendication 1, **caractérisé en ce que** le stabilisant comporte au moins deux groupes carboxy et/ou ester aptes à la polycondensation lors de la formation du polyester.

3. Film de polyester selon la revendication 1 ou 2, **caractérisé en ce que** le stabilisant consiste en un phénol à empêchement stérique.

4. Film de polyester selon une ou plusieurs des revendications 1 à 3, **caractérisé en ce que** la proportion en poids du stabilisant va de 100 à 10 000 ppm, par rapport au poids total du polyester contenant le stabilisant.

5. Film de polyester selon une ou plusieurs des revendications 1 à 4, **caractérisé en ce que** le film contient un ou plusieurs autres stabilisants qui ne sont pas incorporés par liaison covalente dans la chaîne polymère du polyester.

6. Film de polyester selon une ou plusieurs des revendications 1 à 5, **caractérisé en ce que** les autres stabilisants consistent en thioéther et/ou en dithiocarbamate de dibutylétain.

7. Film de polyester selon une ou plusieurs des revendications 1 à 6, **caractérisé en ce que** le polyester utilisé comporte des motifs d'éthylèneglycol et d'acide téréphtalique et/ou des motifs d'acide isophtalique, d'acide naphtalène-2,6-dicarboxylique, d'acide biphényldicarboxylique et/ou des motifs de diols aliphatiques ou cycloaliphatiques ayant de 2 à 8 atomes de carbone.

8. Film de polyester selon une ou plusieurs des revendications 1 à 7, **caractérisé en ce que** le polyester contenant le stabilisant a une viscosité standard de 450 à 1 100.

9. Film de polyester selon une ou plusieurs des revendications 1 à 8, **caractérisé en ce qu'**on utilise comme polyester le poly(éthylène-téréphtalate) ou le poly(éthylène-naphtalate) ou des mélanges de ceux-ci.

**10.** Film de polyester selon une ou plusieurs des revendications 1 à 9, **caractérisé en ce que** le polyester utilisé a une teneur en antimoine inférieure à 150 ppm.

**11.** Film de polyester selon une ou plusieurs des revendications 1 à 10, **caractérisé en ce que** le polyester utilisé a une teneur en antimoine inférieure à 50 ppm.

**12.** Film de polyester selon une ou plusieurs des revendications 1 à 11, **caractérisé en ce que** le film présente une structure de couches A-B-C, les couches de recouvrement A et C étant identiques ou différentes.

**13.** Film de polyester selon une ou plusieurs des revendications 1 à 12, **caractérisé en ce que** le film contient d'autres additifs, tels que des agents anti-adhérence de contact, des colorants, des pigments blancs ou colorés.

**14.** Procédé pour la fabrication d'un film de polyester selon une ou plusieurs des revendications 1 à 13, comprenant les étapes suivantes

> a) production d'un film mono- ou multicouche par extrusion ou coextrusion et mise en forme des masses fondues en films plats de masse fondue,
> b) étirage biaxial du film et
> c) thermofixage du film étiré.

**15.** Utilisation d'un film de polyester selon une ou plusieurs des revendications 1 à 13, dans le secteur de l'électronique, pour le transfert thermique, comme matériau d'emballage, en tant que bande magnétique, film de gaufrage, de séparation, de couvercle ou de condensateur ou en tant que matériau isolant.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- AT 404134

### In der Beschreibung aufgeführte Nicht-Patentliteratur

- **GÄCHTER ; MÜLLER.** Kunststoffadditive. Carl Hanser Verlag

- **DR. HANS ZWEIFEL.** Plastics Additive Handbook. Carl Hanser Verlag